Europäisches Patentamt

(19) European Patent Office

Office européen des brevets

(11) Publication number: **0 150 095**
**B1**

(12) **EUROPEAN PATENT SPECIFICATION**

(45) Date of publication of patent specification: **13.04.88**　(51) Int. Cl.⁴: **C 03 B 37/14**

(21) Application number: **85300257.4**

(22) Date of filing: **15.01.85**

⑽ Consolidated with **85900883.1/0169237**
(European application No./publication No.) by
decision dated **25.08.86.**

(54) **Glass fiber splicing by flame fusion.**

(30) Priority: **24.01.84 US 573141**

(43) Date of publication of application:
**31.07.85 Bulletin 85/31**

(45) Publication of the grant of the patent:
**13.04.88 Bulletin 88/15**

(84) Designated Contracting States:
**DE FR GB IT NL**

(56) References cited:
**EP-A-0 025 585**

**DEUXIEME COLLOQUE EUROPEEN SUR LES
TRANSMISSIONS PAR FIBRES OPTIQUES,
Paris, 27th-30th September 1976, pages 261-
266; R. JOCTEUR et al.: "Communication VIII.5.
Jonction de fibres optiques au chalumeau à arc
plasma et au microchalumeau oxhydrique"**

**PATENTS ABSTRACTS OF JAPAN, vol. 7, no.
231 (P-229)1376r, 13th October 1983; & JP - A -
58 120 215 (KOKUSAI DENSHIN DENWA K.K.)
18-07-1983**

(73) Proprietor: **AMERICAN TELEPHONE AND
TELEGRAPH COMPANY
550 Madison Avenue
New York, NY 10022 (US)**

(72) Inventor: **Krause, John Thorvald
4 Evergreen Avenue
New Providence New Jersey 07974 (US)**

(74) Representative: **Johnston, Kenneth Graham
et al
Western Electric Company Limited 5
Mornington Road
Woodford Green Essex, IG8 OTU (GB)**

Courier Press, Leamington Spa, England.

## Description

The invention is concerned with connecting glass fibers and, more particularly, with producing high-strength splice connections of lightguide glass fibres by heat fusion.

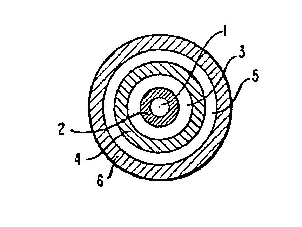

Lightwave communications via lightguide glass fibers is widely considered as virtually certain to replace most of current electrical communications over copper wire, and the manufacture of optical fibers has reached a high level of perfection. Fabrication aspects such as the making of preforms, the drawing of fibers, their coating and sheathing, and their interconnection are highly advanced.

Still, certain areas of manufacture are open to further improvement; e.g. it has been realized that tensile strength of a glass fiber is adversely affected by exposure to water-derived species at elevated temperatures.

Particular attention is due, therefore, the way glass fibers are connected by splicing such as, in particular, by heat fusion splicing.

Deuxieme Coloque europeen sur les Transmissions par Fibres Optiques, Paris, 27—30 September 1976, pages 261—266; R. Jocteur et al.: "Communication VIII.5. Jonction de fibres optiques au chalumeau a arc plasma et au microchalmeau oxhydrique" describes a method of splicing together two fibers by welding. The welding torch described, comprises only two flow regions, namely inner and outer flow regions, with argon being applied to the inner region and argon and hydrogen being applied to the outer region.

It is an object of the present invention to provide a method of fusing fibers which is controllable and which produces a splice of high strength.

According to the present invention there is provided a method of permanently joining two optical fibers by means of a splice, which comprises placing portions of the two glass fibers, to be joined, in contact each with the other, said portions to be joined are respective ends of the two glass fibers, the end portion of one glass fiber being in contact and substantially aligned with the end portion of the other glass fiber, and heating the contacting portions in a flame which results upon combustion in a flow of gases, a central flow portion of the gases being directed at an area of contact between the two end portions, the contacting surfaces of said portions comprising at least 95 weight percent silica, whereby said spliced fiber has a tensile strength which is at least 60 percent of pristine strength. Characterised in that said flow of gases comprises an outer flow portion, an intermediate flow portion which is interior to said outer flow portion, and the central flow portion which is interior to said intermediate flow portion, said outer flow portion comprises at least 50 percent by volume oxygen, said intermediate flow portion comprises at least 50 percent by volume of a gas selected from chlorine, oxygen, and a mixture of chlorine and oxygen, the velocity of the flow of said outer flow portion being greater than the velocity of the flow of said intermediate flow portion, and said central flow portion comprises at least 50 percent by volume of a gas or mixture of gases selected from hydrogen, deuterium, $NH_3$ and $ND_3$, and in that the flow rate in said central flow portion is adjusted such that the temperature of said fiber end portions to be joined is less than or equal to 1800°C.

The Figure is a schematic cross-sectional view of a triple-orifice nozzle of a torch as may be conveniently used to practice the invention.

The Figure shows central orifice 1, intermediate orifice 3, and outer orifice 5 of a triple nozzle having coaxial cylindrical nozzles 2, 4, and 6. Each of the orifices 1, 3, and 5 can be connected to a gas supply to produce a corresponding flow out of each respective orifice. The outer diameter of the outermost nozzle 6 is typically of the order of 0.5 centimeter.

The invention is aimed at producing high-strength splice connections between glass fibers, as are being used, e.g., in optical communications. Such fibers have a surface glass portion which preferably comprises at least 95 weight percent silica, and their diameter is of the order of 100 micrometers. Optical fibers typically comprise a core portion having a refractive index which is slightly greater than the refractive index of a surrounding cladding portion; in the case of fibers for the transmission of a single optical mode the diameter of the core portion may be of the order of 10 micrometers. Raised refractive index of a core portion is conveniently achieved by doping such as, e.g., by the addition of germanium to silica.

Processing in accordance with the invention calls for bringing essentially coaxially aligned glass fibers into end-to-end contact and heating in a flame which is produced upon combustion in a flow of gases. This flow preferably comprises three portions as produced, e.g. by a nozzle as shown in the Figure and as may be designated outer, intermediate, and central portions. The outer flow portion preferably is at least 50 volume percent oxygen, the intermediate flow portion is preferably at least 50 volume percent chlorine, oxygen, or a mixture of chlorine and oxygen, and the central flow portion is preferably at least 50 volume percent hydrogen, ammonia, deuterium, deuterated ammonia, or a mixture thereof. (Chlorine is essentially precluded as a constituent of the intermediate flow portion when the central flow portion comprises appreciable amount of $NH_3$ or $ND_3$.) Preferred are 90 volume percent in each of the three flow portions.

Characteristically, velocity of flow in the outer flow portion is greater than velocity in the intermediate flow portion, preferred velocity being at least twice and preferably ten times the velocity in the intermediate flow. Such velocity differential is considered to be beneficial in that it serves to make the flame more narrow. Also, rapidly flowing outer oxygen results in desirable cooling of the fiber away from the ends of the fibers being spliced. Preferably, flow rate in the outer flow portion is greater than or equal to 5 meters per second. Preferred flow rates in the intermediate flow portion are in the range from 0.1 to 1.0 meter per second.

A splice connection is produced in accordance with the invention by heating in a flame produced upon combustion in a flow having portions as described above. The temperature of fiber ends being joined does not exceed 1800 degrees C or, more favourably, does not exceed 1700 degrees C. Temperature control is most readily achieved by regulating flow through the central orifice. Fusion time depends indirectly on fusion temperature and directly on fiber diameter; fusion times in the range of from 15 seconds to 2 minutes are typical.

Splice connections made in accordance with the invention produce a spliced fiber having a preferred tensile strength which is greater than or equal to 60 percent of pristine fiber strength (the tensile strength of fibers or the lesser of the tensile strengths of fibers being joined). Particularly high strengths of at least 95 percent of pristine strength are achieved when the central flow is essentially hydrogen or deuterium and the intermediate flow is essentially chlorine and if care is taken to prevent excessive heating of fiber ends prior to their being inside of the chlorine flow. This is conveniently achieved by initially keeping central hydrogen flow at a low rate so that a preferred temperature of 500 degrees C is not exceeded until after fiber ends are within the chlorine flow. For fibers consisting essentially of fused silica (typically doped at least in part for optical purposes), resulting fiber strengths are greater than or equal to 5.5 G Pa (800 kpsi).

Example

Two essentially identical single-mode optical fibers were spliced by heat fusing in accordance with the invention. The fibers had Ge-doped cores having a diameter of approximately 10 micrometers and essentially pure silica claddings. Overall fiber diameter was 125 micrometers. The ends of the fibers were placed end-to-end and exposed to a flame produced by a torch having three concentric orifices. Essentially pure oxygen flowing at a rate resulting in a velocity of flow of approximately 10 meters per second was fed to the outer orifice, essentially pure chlorine flowing at a rate resulting in a velocity of flow of approximately 0.6 meters per second was fed to the intermediate orifice, and essentially pure hydrogen was fed to the central orifice. Initial hydrogen flow was adjusted just sufficient to maintain a flame and, after placing the fibers in the flame, hydrogen flow was increased for fusing. A temperature of approximately 1700 degrees C was maintained for approximately 90 seconds, and the spliced fiber was removed from the flame. Tensile strength of the resulting combined fiber was determined to be approximately 5.5 G Pa (800 kpsi).

Claims

1. A method of permanently joining two optical fibers by means of a splice, which comprises placing portions of the two glass fibers, to be joined, in contact each with the other, whereby said portions to be joined are respective ends of the two glass fibers, the end portion of one glass fiber being in contact and substantially aligned with the end portion of the other glass fiber, and heating the contacting portions in a flame which results upon combustion in a flow of gases, a central flow portion of the gases being directed at an area of contact between the two end portions, the contacting surfaces of said portions comprising at least 95 weight percent silica, whereby said spliced fiber has a tensile strength which is at least 60 percent of pristine strength characterised in that said flow of gases comprises an outer flow portion, an intermediate flow portion which is interior to said outer flow portion, and the central flow portion which is interior to said intermediate flow portion, said outer flow portion comprises at least 50 percent by volume oxygen, said intermediate flow portion comprises at least 50 percent by volume of a gas selected from chlorine, oxygen, and a mixture of chlorine and oxygen, the velocity of the flow of said outer flow portion being greater than the velocity of the flow of said intermediate flow portion, and said central flow portion comprises at least 50 percent by volume of a gas or mixture of gases selected from hydrogen, deuterium, $NH_3$ and $ND_3$, and in that the flow rate in said central flow portion is adjusted such that the temperature of said fiber end portions to be joined is less than or equal to 1800°C.

2. Method according to claim 1, characterised by adjusting said flow rate in said central flow portion initially to result in the temperature to be sufficient to maintain a temperature not exceeding about 500°C until the contacting end portions are within the intermediate, chlorine flow, and then increasing the flow rate of said central flow portion to fuse the contacting end portions.

3. A method according to claim 1 or 2, characterised in that said central flow portion is substantially hydrogen or deuterium, said intermediate flow portion is substantially chlorine, and said tensile strength is at least 95 percent of pristine strength.

4. Method according to claims 1 or 2 or 3, characterised in that the velocity of the flow of said outer flow portion is at least twice the velocity of the flow of said intermediate flow portion.

5. Method according to claims 1 or 2 or 3, characterised in that the flow rate in said outer flow portion is adjusted to result in a velocity of the flow greater than or equal to 5 meters per second.

6. Method according to claims 1 or 2 or 3, characterised in that the flow rate in said intermediate flow portion is adjusted to result in a velocity of the flow greater than or equal to 0.1 meters per second.

7. Method according to claim 6, characterised in that the flow rate in said intermediate flow portion results in a velocity of the flow which is less than or equal to 1 meter per second.

8. Method according to claim 1 or 2 or 3, characterised in that said fiber comprises fused silica and said tensile strength is at least 5.5 G Pa (800 kpsi).

## Patentansprüche

1. Verfahren zum dauernden Vereinigen zweier optischer Fasern mit Hilfe einer Verbindung, umfassend

—Anordnen von mit einander zu vereinigenden Teilen der beiden Glasfasern in gegenseitigem Kontakt, womit die zu vereinigenden Teile die jeweiligen Enden der beiden Glasfasern sind, wobei der Enteil der einen Glasfaser in Kontakt und im wesentlichen ausgerichtet ist mit dem Endteil der anderen Glasfaser, und

—Erärmen der einander berührenden Teile in einer Flamme, die von einer Verbrennung in einer Strömung von Gasen herrührt, wobei ein zentraler Strömungsteile der Gase auf ein Gebiet des Kontaktes zwischen den beiden Endteilen gerichtet ist die einander berührenden Flächen der Teile wenigstens 95 Gew.-% Siliciumdioxid umfassen, womit die angesetzte Faser eine Zugfestigkeit von wenigstens 60% der ungestörten Zugfestigkeit besitzt, dadurch gekennzeichnet, daß

—die Strömung der Gase einen äußeren Strömungsteil, einen innerhalb des äußeren Strömungsteils gelegenen mittleren Strömungsteil und den innerhalb des mittleren Strömungsteils gelegenen zentralen Strömungsteil umfaßt,

—der äußere Strömungsteil wenigstens 50 Vol-% Sauerstoff umfaßt,

—der mittlere Strömungsteil wenigstens 50 Vol.-% eines von Chlor, Sauerstoff oder einer Mischung von Chlor und Sauerstoff ausgewählten Gases umfaßt,

—die Strömungsgeschwindigkeit des äußeren Strömungsteils größer ist als die des mittleren Strömungsteils,

—der zentrale Strömungsteil wenigstens 50 Vol.-% eines von Wasserstoff, Deuterium, NH$_3$ und ND$_3$ sowie von Mischungen hiervon ausgewählten Gases umfaßt und

—der Durchsatz im zentralen Strömungsteil so eingestellt wird, daß die Temperatur der zu vereinigenden Faserendteile kleiner oder gleich 1800°C ist.

2. Verfahren nach Anspruch 1, gekennzeichnet durch

—Einstellen des Durchsatzes des zentralen Strömungsteils, um anfänglich eine Temperatur zu erhalten, die ausreicht, eine etwa 500°C nicht überschreitende Temperatur aufrecht zu halten bis sich die einander berührenden Endteile innerhalb der mittleren Chlorströmung befinden, und anschließendes Erhöhen des Durchsatzes des zentralen Strömungsteils um die einander berührenden Endteile zu schmelzen.

3. Verfahren nach Anspruch 1 oder 2, dadurch gekennzeichnet, daß

—der zentrale Strömungsteil im wesentlichen Wasserstoff oder Deuterium ist,

—der mittlere Strömungsteil im wesentlichen Chlor ist und

—die Zugfestigkeit wenigstens 95% der ungestörten Zugfestigkeit ist.

4. Verfahren nach den Ansprüchen 1 oder 2 oder 3, dadurch gekennzeichnet, daß

—die Strömungsgeschwindigkeit des äußeren Strömungsteils wenigstens das doppelte der Strömungsgeschwindigkeit des mittleren Strömungsteils ist.

5. Verfahren nach den Ansprüchen 1 oder 2 oder 3, dadurch gekennzeichnet, daß

—der Durchsatz des äußeren Strömungsteils so eingestellt wird, daß eine Strömungsgeschwindigkeit von größer oder gleich 5 Meter pro Sekunde resultiert.

6. Verfahren nach den Ansprüchen 1 oder 2 oder 3, dadurch gekennzeichnet, daß

—der Durchsatz des mittleren Strömungsteils so eingestellt wird, daß eine Strömungsgeschwindigkeit größer oder gleich 0,1 Meter pro Sekunde resultiert.

7. Verfahren nach Anspruch 6, dadurch gekennzeichnet, daß

—der Durchsatz des mittleren Strömungsteils zu einer Strömungsgeschwindigkeit führt, die kleiner oder gleich 1 Meter pro Sekunde ist.

8. Verfahren nach Anspruch 1 oder 2 oder 3, dadurch gekennzeichnet, daß

—de Faser Quarzglas umfaßt und

—die Zugfestigkeit wenigstens 5,5 G Pa (800 kpsi) ist.

## Revendications

1. Un procédé pour joindre de façon permanente deux fibres optiques au moyen d'une épissure, dans lequel on place en contact mutuel des parties des deux fibres de verre à joindre, les parties à joindre étant des extrémités respectives des deux fibres de verre, la partie d'extrémité d'une fibre de verre étant en contact et pratiquement alignée avec la partie d'extrémité de l'autre fibre de verre, et on chauffe les parties en contact dans une flamme qui résulte d'une combustion dans un écoulement de gaz, une partie d'écoulement centrale des gaz étant dirigée vers une zone de contact entre les deux parties d'extrémité, et les surfaces en contact de ces parties comprenant au moins 95% en poids de silice, grâce à quoi la fibre épissée a une résistance à la traction qui est d'au moins 60% de la résistance d'origine, caracterise en ce que l'écoulement de gaz comprend une partie d'écoulement extérieure, une partie d'écoulement intermédiaire qui se trouve à l'intérieur de la partie d'écoulement extérieure, et la partie d'écoulement centrale qui se trouve à l'intérieur de la partie d'écoulement intermédiaire, la partie d'écoulement extérieure comprend au moins 50% en volume d'oxygène, la partie d'écoulement intermédiaire comprend au moins 50% en volume d'un gaz sélectionné parmi le chlore, l'oxygène et un mélange de chlore et d'oxygène, la vitesse de l'écoulement de la partie d'écoulement extérieure étant supérieure à la vitesse de l'écoulement de la partie d'écoulement intermédiaire, et la partie d'écoulement centrale comprend au moins 50% en volume d'un gaz ou d'un mélange de gaz sélectionné parmi l'hydrogène, le deutérium, NH₃ et ND₃, et en ce que le débit dans la partie d'écoulement centrale est réglé de façon que la température des parties d'extrémité de fibre à joindre soit inférieure ou égale à 1800°C.

2. Procédé selon la revendication 1, caracterise par les opérations qui consistent à régler initialement la vitesse d'écoulement dans la partie d'écoulement centrale à une valeur suffisante pour maintenir une température ne dépassant pas environ 50°C, jusqu'à ce que les parties d'extrémité en contact se trouvent dans l'écoulement de chlore intermédiaire, et à augmenter ensuite la vitesse d'écoulement de la partie d'écoulement centrale pour provoquer la fusion des parties d'extrémité en contact.

3. Un procédé selon la revendication 1 ou 2, caracterise en ce que la partie d'écoulement centrale consiste pratiquement en hydrogène ou en deutérium, la partie d'écoulement intermédiaire consiste pratiquement en chlore, et la résistance à la traction est d'au moins 95% de la résistance d'origine.

4. Procédé selon les revendications 1 ou 2 ou 3, caracterise en ce que la vitesse de l'écoulement dans la partie d'écoulement extérieure est au moins deux fois supérieure à la vitesse de l'écoulement dans la partie d'écoulement intermédiaire.

5. Procédé selon les revendications 1 ou 2 ou 3, caracterise en ce que le débit dans la partie d'écoulement extérieure est réglé de façon à donner une vitesse d'écoulement supérieure ou égale à 5 mètres par seconde.

6. Procédé selon les revendications 1 ou 2 ou 3, caracterise en ce que le débit dans la partie d'écoulement intermédiaire est réglé de façon à donner une vitesse de l'écoulement supérieure ou égale à 0,1 mètre par seconde.

7. Procédé selon la revendication 6, caracterise en ce que le débit dans la partie d'écoulement intermédiaire donne une vitesse de l'écoulement qui est inférieure ou égale à 1 mètre par seconde.

8. Procédé selon la revendication 1 ou 2 ou 3, caracterise en ce que la fibre consiste en silice fondue et la résistance à la traction est d'au moins 5, 5 GPa.